# EUROPEAN PATENT APPLICATION

(11) **EP 1 289 328 A1**
(43) Date of publication of application: **05.03.2003**
(21) Application number: 01307261.6
(22) Date of filing: 28.08.2001
(51) Int. Cl.: H04Q 7/38, H04B 7/005

(54) **A method of sending control information in a wireless telecommunications network, and corresponding apparatus**

(71) Applicant: LUCENT TECHNOLOGIES INC., Murray Hill, New Jersey 07974-0636 (US)
(72) Inventor: Luschi, Carlo, Oxford (GB); Samuel, Louis Gwyn, Abbey Meads, Swindon (GB)
(74) Representative: Sarup, David Alexander

(57) **Abstract**

In a wireless telecommunications network, a method of sending control information from a first terminal (2,UE) to a second terminal (UE,2) is provided. The method includes at a time both sending control information over a first dedicated channel and sending further control information over at least one further dedicated channel. The transmission power(s) of the or each dedicated channel is/are selected dependent upon the transmission power of the first dedicated channel.

## Description

### Technical Field

The present invention relates to methods of sending control information from/ between a first terminal to a second terminal in a wireless telecommunications network, a wireless telecommunications network, and a terminal for wireless telecommunications.

### Background of the Invention

High-speed packet transmission schemes are currently under development in the evolution of third generation (3G) telecommunication systems. Key factors that enable the high performance of these technologies include higher peak data rates via high order modulation such as 16 or 64 quadrature amplitude modulation, fast scheduling of the users within a common shared channel, and the use of multiple antenna techniques for transmission and reception. Features supporting fast scheduling are Hybrid-Automatic Repeat Request (H-ARQ) i.e. ARQ with Forward Error Correction (FEC) coding, and fast rate selection based on feedback of estimated link quality. Fast rate selection, combined with time domain scheduling on the shared channel, enables advantage to be taken of the short-term variations in the signal received by the mobile terminals, so that each user can be served on a constructing fading, i.e. each user is scheduled for transmission so as to minimise the chance of destructive interference
The High Speed Downlink Packet Access (HSDPA) scheme currently under study within the 3rd Generation Partnership Project (3GPP) is based on the use of a forward channel that is time shared by multiple packet data users. This High Speed Downlink Shared Channel (HS-DSCH) is capable of supporting peak rates of up to 15 Mbit/sec. It uses a fixed spreading factor, with the possibility of code multiplexing different users on a given Transmission Time Interval (TTI), which is defined as the duration for which the shared channel is assigned to one user. The possible TTI lengths are 1, 3, 5, or 15 time slots of 0.667 msec.
The extension of the above approach to a packet access scheme which includes both uplink and downlink high-speed transmission has the advantage of higher data rates in the uplink direction. However, the presence of a bi-directional high-rate transmission requires modification of the signalling mechanism, with respect to previous transmission schemes supporting only downlink high-speed data.
Current 3GPP work on High Speed Data Packet Access (HSDPA) is to consider signalling of uplink control information on a dedicated control channel, while downlink control information is transmitted by using an associated dedicated channel plus a HS-DSCH Control Channel (HCCH), shared among all the users waiting for transmission on the HS-DSCH.
A basic motivation for using a downlink shared control channel (HCCH) to support the High Speed Downlink Shared Channel (HS-DSCH) is that part of the downlink control information (e.g. the signalling associated with H-ARQ) is not needed to decode the downlink shared channel HS-DSCH frame at the mobile terminal (also known as a user equipment UE). Therefore, this information can be in principle transmitted simultaneously with the downlink shared channel HS-DSCH frame on the HCCH shared control channel. On the other hand, control information needed to decode the HS-DSCH frame should be carried by the associated downlink dedicated physical channel (DPCH), transmitted in advance with respect to the HS-DSCH Transmission Time Interval. One advantage of the use of a HCCH shared control channel over dedicated physical channel DPCH signalling is that the HCCH shared control channel is shared by all the users. Therefore, this approach does not require more than one dedicated channel per user equipment (UE). Additional dedicated physical channels (DPCHs) would use code space resources, and in general require additional signalling, for example for power control. A problem with the HCCH shared control channel is the poor reliability of transmission over the given carrier to interference (C/I) range without power control. To alleviate this problem, it has been proposed to transmit the shared control channel over the same number of slots as the HS-DSCH DSCH Transmission Time Interval, with the same shared control channel (HCCH) bits repeated in each slot. However, this may result in high memory requirements at the UE.

Current 3GPP work on HSDPA is also to consider the following possible approaches for the implementation of the HS-DSCH downlink shared channel control channels:

### Downlink Signalling:

One option is a two-step approach in which part of the HS-DSCH control information is mapped to a HS-DSCH Control Channel (HCCH), shared among all the UEs waiting for transmission on the shared channel HS-DSCH; additional HS-DSCH downlink signalling is mapped to an associated dedicated physical channel DPCH.
Another option is a one step approach in which all HS-DSCH control information is mapped to the HCCH control channel; additional non HS-DSCH related signalling being mapped to the associated dedicated physical channel DPCH.

### Uplink Signalling:

A dedicated physical control channel DPCCH structure has been proposed (with spreading factor SF = 128), where HS-DSCH shared channel control information is time multiplexed with control data of the Release 1999 (R99) dedicated physical control channel DPCCH. Alternative proposals are use of the R99 dedicated physical control channel DPCCH structure (with SF = 256); HS-DSCH control information being carried on a further dedicated physical control channel (DPCCH-2) which is code multiplexed with the original dedicated physical control channel (DPCCH).

### Summary of the Invention

The present invention provides a method of sending control information from a first terminal to a second terminal in a wireless telecommunications network including at a time both sending control information over a first dedicated channel and sending further control information over at least one further dedicated channel.

Advantages of preferred embodiments are that for both uplink and downlink it is possible to provide multiple dedicated control channels, all relying on the first dedicated physical channel (DPCH) for power control. With this approach DPCH signalling has no significant penalty in terms of control overhead. Control bits that are not used are then gated off, so that the use of dedicated control channels does not cause unnecessary interference. There are particular advantages where most of the users in a cell use the HS-DSCH downlink shared channel for data transmission as then the issue of usage of downlink code resources for multiple dedicated channels becomes less important.

Preferably transmission power(s) of the or each dedicated channel is/are selected dependent upon the transmission power of the first dedicated channel. Preferably the transmission power(s) are selected to be the same as that of the first dedicated channel.
An advantage of preferred embodiments is the reliability of uplink and downlink signalling without control overhead by reuse of the associated DPCH power control.

Preferably at least one of the further dedicated channels carries control information to control a downlink shared channel (HS-DSCH).
Preferably at least one of the further dedicated channels carries control information to control an uplink shared channel (HS-USCH).

Preferably not all or only one of said dedicated channel and said further dedicated channels carries control information for a dedicated control channel
.Preferably said control information containing pilot bits and/or transmit power control (TPC) bits. Furthermore, preferably the first terminal is a base station, the second terminal is a user terminal, and the dedicated control channel is an uplink dedicated control channel. Alternatively, furthermore preferably the first terminal is a user terminal, the second terminal is a base station, and the dedicated control channel is an downlink dedicated control channel.

Preferably the first terminal is a user terminal and the second terminal is a base station. Preferably at least one of the further dedicated channels carries control information in a format containing status information (BSI) of the buffer of the user terminal and information (QI) of downlink received signal quality.

An advantage of preferred embodiments is uplink and/or downlink high-speed packet access with feedback of buffer status information from the mobile users.

Preferably the wireless telecommunications network is a High Speed - Packet Access network.
Preferably the wireless telecommunications network is a Universal Mobile Telecommunications System (UMTS) network , or other Third generation (3G) network or higher. Preferably the wireless telecommunications network is a frequency division duplex (FDD) system.
Preferred embodiments thus advantageously provide use of one or more associated dedicated physical channels (DPCHs) for both the downlink shared channel (HS-DSCH) and uplink shared channel (HS-USCH) for Universal Mobile Telecommunications System (UMTS) in frequency division duplex (FDD) mode.

The present invention also provides a corresponding wireless telecommunications network, base station, user terminal, and method of sending control information in both directions between a first and second terminal.
A further advantage of preferred embodiments is reduction of the interference due to signalling by the selective transmission of control information required to support high-speed data, only on the uplink, only on the downlink, or on both uplink and downlink. A further advantage of preferred embodiments is reduction of the UE buffering requirements by downlink signalling in advance with respect to the uplink shared channel transmission time interval (HS-USCH TTI).

The present invention also provides a method of sending control information between a first terminal and a second terminal in a wireless telecommunications network, the terminals each being operative to send at a time to the other terminal control information on a respective first dedicated channel and further control information on at least one respective further dedicated channel.
An advantage of preferred embodiments is symmetric uplink and downlink signalling using dedicated control channels. It is also worth noting that there is uplink control information related to the HS-SCH shared channel, like measurement report and buffer status, that cannot be signalled instead on a shared control channel.

The present invention also provides a wireless telecommunications network comprising a first terminal and a second terminal, at least one of the first and second terminals being operative to send at a time to the other of the first and second terminals control information over a first dedicated channel and further control information over at least one further dedicated channel.

The present invention also provides a terminal for wireless telecommunications comprising means operative to control information over a first dedicated channel and further control information over at least one further dedicated channel.

Preferably, the terminal is a base station. Alternatively, the terminal is preferably a user terminal. Preferably, at least some of the control information relates to supporting a downlink shared channel. Preferably, at least some of the control information relates to supporting an uplink shared channel. Preferably the base station includes a scheduler to schedule transmissions on the or each shared channel.
An advantage of preferred embodiments is support of both uplink and downlink high-speed packet access with scheduling at the base station.

### Brief Description of the Drawings

A preferred embodiment of the present invention will now be described by way of example and with reference to the drawings, in which:
Figure 1 is a diagrammatic illustration of a base station and one active mobile station (of many),
Figure 2 is a diagram of an example downlink Dedicated physical Channel DPCH frame structure for HS-SCH,
Figure 3 is a diagram of an example uplink Dedicated physical Channel DPCH frame structure for HS-SCH,
Figure 4 is a diagram of signal flow for HSPA in making a network connection,
Figure 5 is a diagram of signal flow for HSPA in making a HS-DSCH transmission,
Figure 6 is a diagram of signal flow for HSPA in making a HS-DSCH transmission after HS-USCH scheduling request by random access channel RACH/physical random access channel PRACH , and
Figure 7 is a diagram of signal flow for HSPA in making simultaneous downlink shared channel HS-DSCH and uplink shared channel HS-DSCH transmissions after HS-USCH scheduling request by RACH/PRACH

### Detailed Description

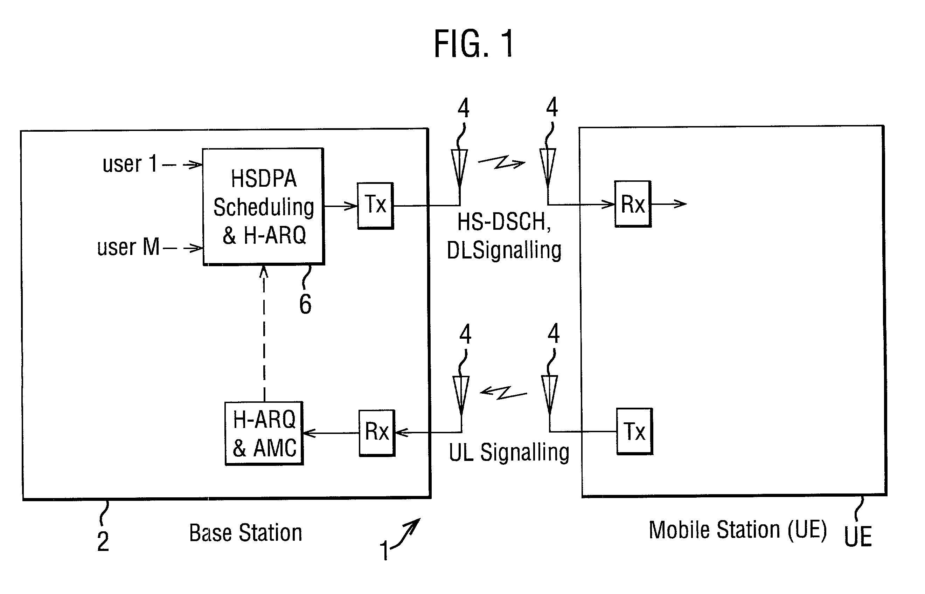

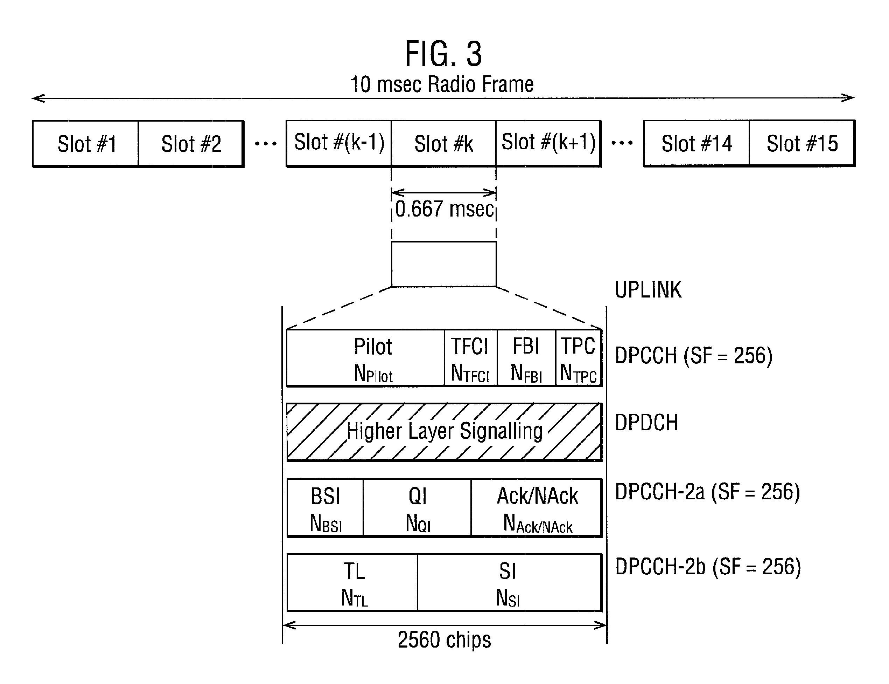

As shown in Figure 1, the preferred network 1 includes a base station 2 and many mobile stations UE communicating therewith ( one UE being shown in Figure 3 for simplicity). The base station 2 and mobile UE each have a transmitter Tx and a receiver Rx, each transmitter Tx and receiver Rx having a respective antenna 4. On the downlink, a High Speed-Downlink Shared Channel (HS-DSCH) is used, and on the uplink, a High Speed-Uplink Shared Channel (HS-USCH) is used.

### Signalling Requirements for High-Speed Packet Access

In this section, a description is given of the exchange of control information required to perform high-speed packet access (HSPA) in both downlink and uplink. It is assumed that a connection has already been established between the network (base station) and the user equipment UE. For a system based on 3GPP WCDMA (or UMTS Terrestrial Radio Access Network (UTRAN)), this is achieved by system information broadcasting using the downlink Broadcast Channel (BCCH/BCH, transmitted on the Common Control Physical Channel (CCPCH), according to the 3GPP terminology). This broadcast information enables a connection establishment procedure using an uplink connection request message (ARC_Connection_Request message on the uplink Common Control Channel (CCCH/RACH)). The procedure also involves a downlink message for interrogating the UE capabilities (RRC_Connection_Setup message on the downlink CCCH (CCCH/FACH)), which are reported in a final uplink message (RRC_Connection_Setup_Complete message on the Dedicated Control Channel (DCCH)). This bi-directional (logical) control channel will then be used to transmit control information between the user equipment UE and the network (base station). The broadcast Common Control Physical channel CCPCH includes information on the network capability to support high-speed transmission. Similarly, the common control channel CCCH reports the user equipment's HSPA capabilities, including the information on the number of UE transmit/receive antennas.

Downlink Transmission - In the proposed HSPA scheme, the operation of network-initiated downlink packet transmission is similar to known HSDPA schemes using fast rate selection by Adaptive Modulation and Coding (AMC), and H-ARQ at the MAC layer. With AMC, the transmitted power is held constant, and the modulation and coding is changed to match the current channel conditions. In a system implementing AMC, users with favourable channel conditions, e.g.users close to the base station, are typically assigned higher order modulation with higher code rates, which results in higher data rates.
Scheduling of the different users on the (HS-DSCH) downlink shared channel is performed on the basis of the channel conditions and the UE negotiated Quality of Service (QoS). The actual transmission of one downlink shared channel (HS-DSCH ) frame (TTI) is preceded by downlink signalling of: UE identification (so that decoding of the next frame is performed only by the UE scheduled on the HS-DSCH), modulation and coding scheme (MCS), channelization code(s), and H-ARQ parameters on the corresponding UE control channel. UE identification is implicitly signalled by communicating the relevant Transport Format Combination Indicator (TFCI) only to the UE scheduled for transmission. In turn, the UE must transmit a frame acknowledgement (Ack/NAck) and a periodic feedback of the measured downlink channel quality (Quality Information QI).

Uplink Transmission - UE-initiated uplink transmission is intended to operate according to the same principles as for the downlink, with the exception that the packet flow is established by a Random Access Channel (RACH) communicating quality of service (QoS) and amount of data to be transmitted. A HS-USCH uplink shared channel scheduler resides at the network (i.e. base station) side, which requires the uplink signalling of the UE's current buffer status. As further discussed below, an advantage of using a random access channel (RACH) before each packet flow is that it limits the amount of signalling required for the HS-USCH. However, the UE flow should remain allocated for a long enough period that, for example, multiple random access channels RACHs within in the same packet service session are avoided. The transmission of one HS-USCH uplink shared channel frame (TTI) is preceded by downlink signalling of modulation and coding scheme (MCS) and channelization code(s). This implicitly communicates to the given UE that it is scheduled on the uplink shared channel (HS-USCH). The UE must then also transmit H-ARQ parameters and current buffer status (BSI). In turn, the base station must signal downlink Ack/NAck, and possibly timing advance information (TAI) for HS-USCH uplink shared channel synchronization.

The overall signalling required for the High-Speed Uplink Shared Channel (HS-USCH) and High-Speed Downlink Shared Channel (HS-DSCH) transmission can therefore be summarized as follows:
UE identification - UEs need to be told when they are scheduled for downlink data transmission in the next HS-DSCH Transmission Time Interval TTI, and when they are scheduled for uplink data transmission in the next HS-USCH. It is assumed that this information can be implicitly signalled with sufficient reliability by the use of the appropriate downlink Dedicated Physical Control Channel (DPCCH) for a given UE, transmitted in advance of the HS-DSCH TTI.
Modulation and Coding Scheme - UEs scheduled for downlink transmission need to be told which modulation and coding scheme (MCS) is to be used in the corresponding HS-DSCH TTI. UEs scheduled for uplink transmission need to be told which MCS to use in the corresponding HS-USCH TTI. MCS signalling for HS-USCH and HS-DSCH can be implicitly performed by transmitting Transport Block Set Size Indication (TBI) and the TTI Length (TL) values.
Code Channels - UEs scheduled for downlink transmission need to be told the codes they will receive on the HS-DSCH. UEs scheduled for uplink transmission need to be told the codes to be used on the HS-USCH.
H-ARQ Parameters - For both the uplink and downlink shared channels, there is the need to signal the information on a) H-ARQ process number or SAW Parallel Channel Identifier (SI), indicating the subchannel number for N-channel SAW H-ARQ; b) H-ARQ Sub-Block Identifier (SBI); and c) H-ARQ redundancy version, in the case of possible use of code combining or incremental redundancy techniques. There is a strict timing relation between the reception of uplink or downlink data on the HS-SCH and the transmission of the corresponding acknowledgment, so signalling of a block sequence number is not required.
Ack/NAck - For both the uplink and downlink shared channels, the Ack/NAck signalling indicates a successful/unsuccessful transmission on the corresponding HS-SCH.
Measurement Report - To enable fast rate selection by AMC, UEs must explicitly report an estimate of the downlink channel quality (Quality Information QI) or the downlink supportable rate.
Measurement Feedback Rate - For both the uplink and downlink shared channels, the network (base station) determines the required rate of transmission of the feedback measurement report, and communicates this information to the UE.
Buffer Status - To assist in HS-USCH scheduling at the base station, UEs should explicitly report the amount of information still to be sent and currently buffered (Buffer Status Information BSI).
Buffer Status Feedback Rate - For both the uplink and downlink shared channels, the network determines the required rate of transmission of the current buffer status, and communicates this information to the UE.
Timing Advance Information - To synchronize the timing of the HS-USCH received from different UEs, each UE must be provided with the information on the required timing offset for HS-USCH transmission, with respect to the corresponding uplink DPCH.

### Proposed Uplink and Downlink Signalling Schemes

Use is proposed of one or more associated dedicated physical channels (DPCHs) for both HS-DSCH and HS-USCH in FDD mode.

Additional DPCHs use code space resources, and in general imply the need of additional signalling, for example for power control. However, the issue of usage of downlink code resources becomes less important if most of the users in a cell use the HS-DSCH for data transmission. Moreover, for both uplink and downlink it is possible to consider multiple dedicated control channels, all relying onthe original R99 DPCH for power control. With this approach DPCH signalling has no penalty in terms of control overhead. Control bits that are not used can then be gated off, so that the use of dedicated control channels does not cause unnecessary interference. It is also worth noting that there is uplink control information related to the HS-SCH, like measurement report and buffer status, that cannot be signalled on a shared control channel. From this point of view, the use of DPCHs on both uplink and downlink results in a symmetric signalling scheme.

### Downlink Signalling:

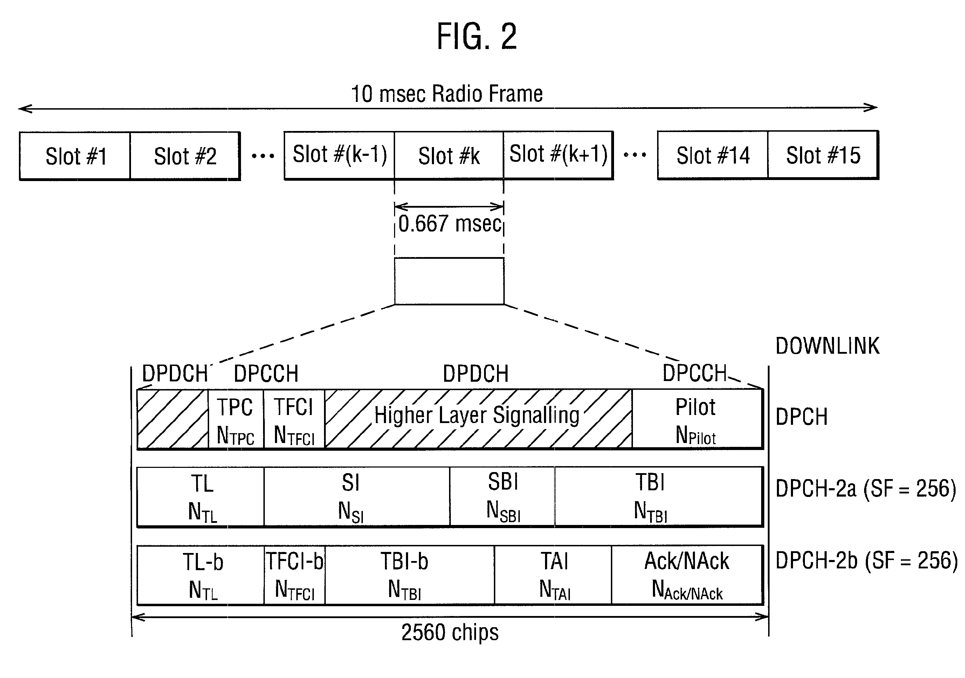

For downlink signalling, we consider a principal associated dedicated physical channel DPCH with frame structure as specified in R99, and shown in 2. Dedicated physical data channel (DPDCH)and dedicated physical control channel (DPCCH) data are QPSK symbols, with a variable spreading factor. The slot format is configured by upper layer signalling. The DPCCH contains Pilot bits, Transmit Power Control (TPC) bits for the uplink DPCCH, and Transport Format Combination Indicator (TFCI) bits for the HS-DSCH. The DPDCH portions of the DPCH carries higher layer signalling.
Further HS-SCH control information is mapped to two additional DPCHs, with their frame structures also shown in Figure 2. These associated control channels have both a fixed spreading factor SF = 256, and reuse the same power control of the principal DPCH. The first additional DPCH (DPCH-2a) carries information related to the HS-DSCH, including TL, SI, SBI, and TBI. The second additional DPCH (DPCH-2b) carries signalling needed to support HS-USCH, including the corresponding TFCI (which communicates the HS-USCH channelization codes), TL, TBI, Ack/NAck, and the Timing Advance Information (TAI) for uplink slot synchronization. Timing advance information may alternatively be sent by higher layer signalling. In the example of Figure 2 we consider only code combining H-ARQ, and the information on the H-ARQ redundancy version is not transmitted. For each slot, it is assumed a repetition of the Ack/NAck bit over N_{Ack/NAck} bits/slot, while the TAI is transmitted over more than one time slot using N_{TAI} bits/slot.
In the above scheme, it is considered that downlink information on the required feedback rate of measurement report and buffer status is transmitted to the different UEs by higher layer signalling.

### Uplink Signalling:

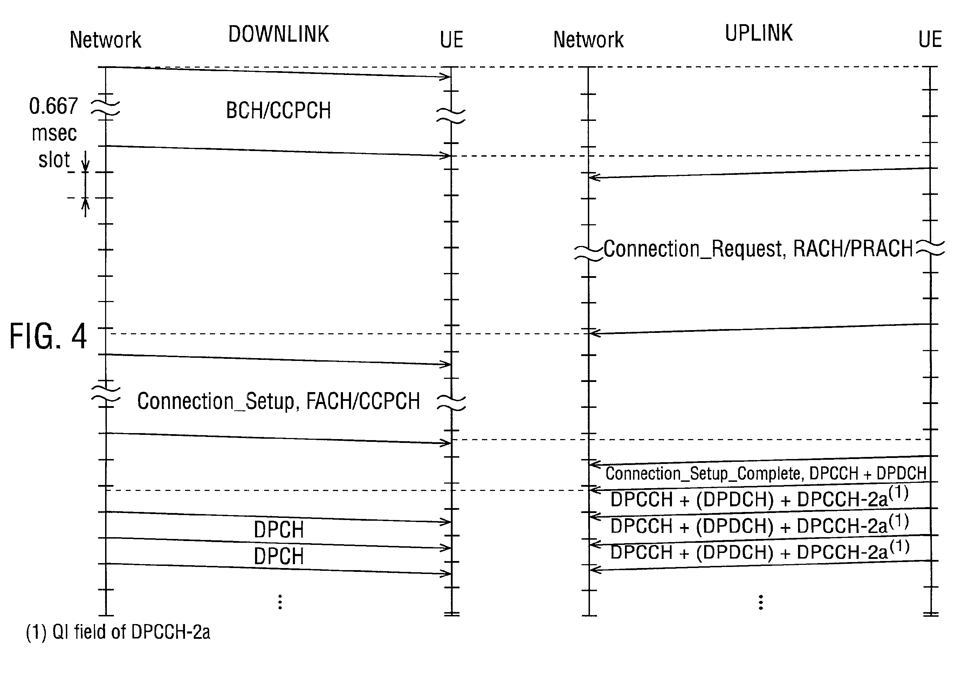

For uplink signalling, we consider a principal associated DPCH with the same frame structure as in R99. Here, DPDCH and DPCCH are I/Q code multiplexed. The DPCCH part of the DPCH has a SF = 256, and contains Pilot bits, TPC bits for the DPDCH, and Feedback Information (FBI) bits to support Fast Site Selection and closed-loop transmit diversity. The DPDCH carries higher layer signalling, and has a variable spreading factor. As shown in Figure 3, two new DPCCH formats are used to carry additional control information for HS-SCH. These additional channels rely on the power control of the principal DPCCH, and have a fixed SF = 256. The first additional DPCCH (DPCCH-2a) contains Buffer Status Information (BSI), downlink Quality Information (QI), and Ack/NAck relative to the HS-DSCH. The second additional DPCCH (DPCCH-2b) carries signalling supporting the HS-USCH, including the TL and SI bits. In the example of Figure 3, the buffer status (BSI) is transmitted over more than one time slot using N_{BSI} bits/slot, while the measurement report (QI) is typically transmitted over 3 time slots with N_{QI} bits/slot. The BSI and QI feedback rate can be modified by higher layer signalling.
With the above scheme, the fields of DPCCH-2a that are not required are gated off. We observe that it is alternatively possible to define multiple DPCCH-2a formats with different spreading factor according on the number of bits to be transmitted.
Examples of the overall signal flow for uplink and downlink HSPA based on the proposed signalling scheme are shown in Figures 4 to 7.
Figure 4 shows the signal flow for establishing a HSPA network connection. System information is broadcasted in the downlink by the UMTS BCCH/BCH channel transmitted on a CCPCH. After an uplink connection request and a downlink connection setup message, the UE HSPA capabilities are signalled on a Connection_Setup_Complete message on a DCCH. This bidirectional control channel is then used to transmit control information between the UE and the network.

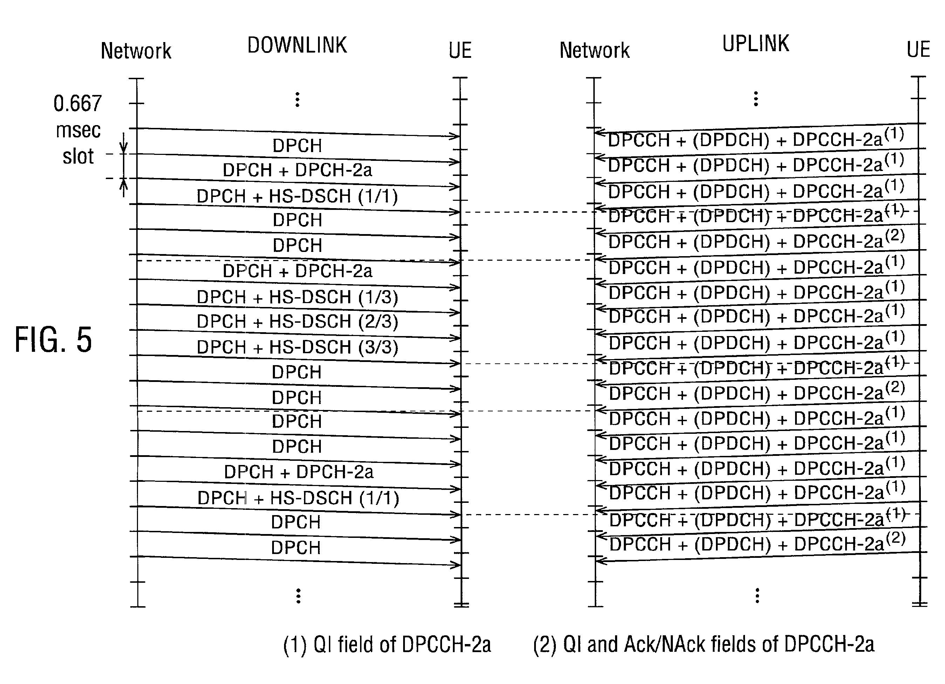

Figure 5 shows the signal flow in the case of HS-DSCH transmission. On the downlink, the control signalling associated with the HS-DSCH is sent on the DPCH-2a channel of Figure 2 before transmission of each downlink data frame. On the uplink, the DPCCH-2a of Figure 3 contains an Ack/NAck field after a fixed delay from the reception of each HS-DSCH frame.

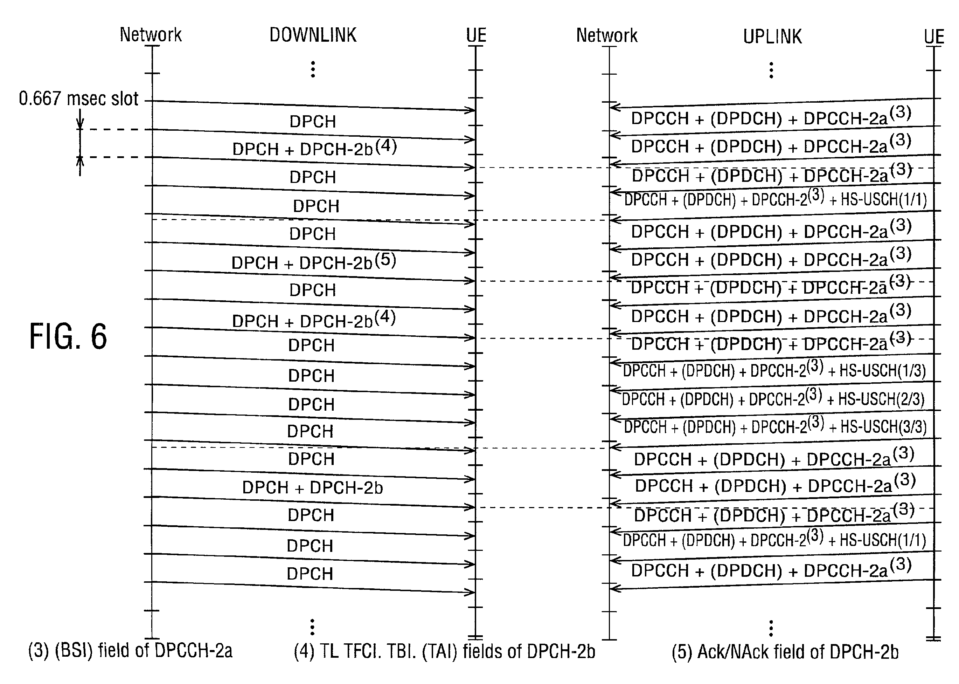

Figure 6 shows the signal flow in the case of HS-USCH transmission. On the downlink, the control signalling associated with the HS-USCH is sent on the DPCCH-2b of Figure 2 before transmission of each uplink data frame. This control channel contains an Ack/NAck field after a fixed delay from the reception of each HS-USCH frame.

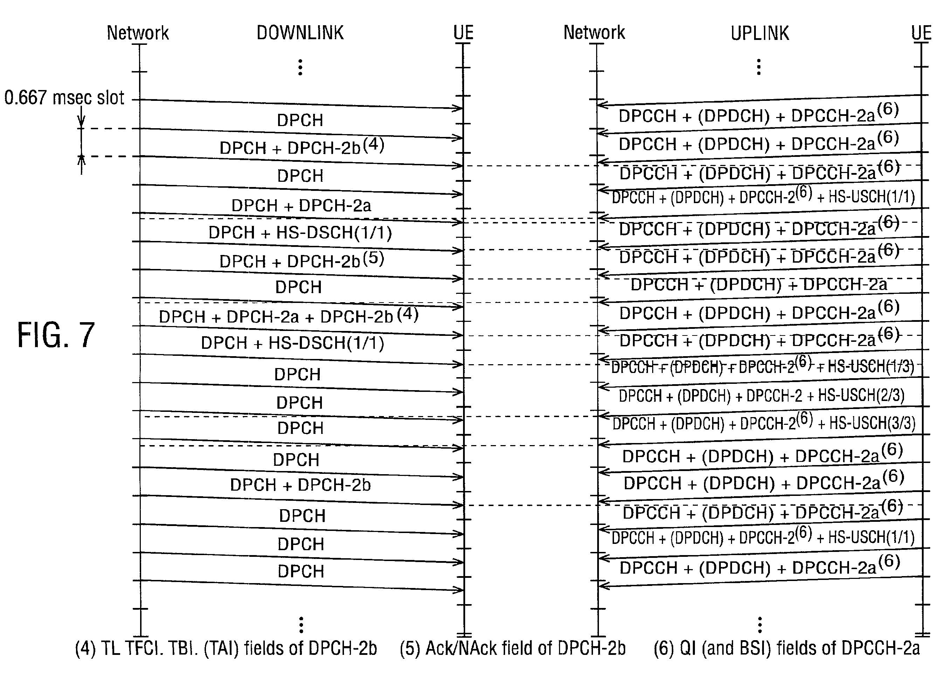

Figure 7 summarizes the above signal flows in the case of simultaneous HS-DSCH and HS-USCH transmission. In this case, both DPCH-2a and DPCH-2b control channels of Figures 2 and Figure 3 are employed.

## Claims

1. A method of sending control information from a first terminal to a second terminal in a wireless telecommunications network including at a time both sending control information over a first dedicated channel and sending further control information over at least one further dedicated channel.

2. A method of sending control information according to claim 1, in which transmission power(s) of the or each dedicated channel is/are selected dependent upon the transmission power of the first dedicated channel.

3. A method of sending control information according to claim 1 or claim 2, in which at least one of the further dedicated channels carries control information to control a downlink shared channel (DSCH).

4. A method of sending control information according to any of claims 1 to 3, in which at least one of the further dedicated channels carries control information to control an uplink shared channel (USCH).

5. A method of sending control information according to any of claims 1 to 4, in which only one of said dedicated channel and said further dedicated channels carries control information for a dedicated control channel, said control information containing pilot bits and/or transmit power control (TPC) bits.

6. A method of sending control information according to any of claims 1 to 5, in which the first terminal is a user terminal and the second terminal is a base station, and at least one of the further dedicated channels carries control information in a format containing status information (BSI) of the buffer of the user terminal and information (QI) of downlink received signal quality.

7. A method of sending control information between a first terminal and a second terminal in a wireless telecommunications network, the terminals each being operative to send at a time to the other terminal control information on a respective first dedicated channel and further control information on at least one respective further dedicated channel.

8. A wireless telecommunications network comprising a first terminal and a second terminal, at least one of the first and second terminals being operative to send at a time to the other of the first and second terminals control information over a first dedicated channel and further control information over at least one further dedicated channel.

9. A terminal for wireless telecommunications comprising means operative to send at a time both control information over a first dedicated channel and further control information over at least one further dedicated channel.

10. A terminal for wireless telecommunications according to claim 9, which is a base station including a scheduler to schedule transmissions on the or each shared channel.
